# EUROPÄISCHE PATENTSCHRIFT

(11) **EP 1 864 739 B1**
(45) Veröffentlichungstag und Bekanntmachung des Hinweises auf die Patenterteilung: **11.03.2009**
(21) Anmeldenummer: 06115040.5
(22) Anmeldetag: 06.06.2006
(51) Int. Cl.: B23F 17/00, B23F 5/20, B23F 9/10

(54) **Vorrichtung und Verfahren zur Weichbearbeitung von Kegelrädern und Verwendung der Vorrichtung**
Device and method for green machining bevel gears
Dispositif et procédé d'usinage avant traitement de roues coniques

(43) Veröffentlichungstag der Anmeldung: 12.12.2007
(73) Patentinhaber: Klingelnberg GmbH, 42499 Hückeswagen (DE)
(72) Erfinder: Langerfeld, Rolf, 42499 Hückeswagen (DE)
(74) Vertreter: OK pat AG

(56) Entgegenhaltungen:
- DD-A- 88 716
- DE-A1- 10 124 779
- DE-U1- 9 412 276
- JP-A- 61 168 420

## Beschreibung

Die vorliegende Erfindung betrifft Vorrichtungen für die Weichbearbeitung von Kegelrädern, insbesondere Vorrichtungen, die zum Trockenbearbeiten ausgelegt sind. Die Erfindung betrifft auch ein entsprechendes Verfahren und eine Verwendung der Vorrichtung.

Es gibt verschiedenste Maschinen, die bei der Fertigung von Kegelrädern und ähnlichen Zahnrädern zum Einsatz kommen. Seit einiger Zeit besteht der Wunsch die Fertigung auch besonders grossmoduliger Kegelräder, wie sie zum Beispiel im Schiffs- oder Kraftwerksbau zum Einsatz kommen, zu automatisieren.

Ein Problem, das sich dabei stellt ist, dass solche Maschinen nicht nur sehr komplex und daher teuer, sondern auch sehr gross und sperrig sein würden. Ausserdem erfordert die Bearbeitung eines grossmoduligen Kegelrades einen relativ großen Aufwand beim vorbereitenden Einrichten (Rüstzeit). Während dieser Zeit würde eine teuere Maschine still stehen, was aus finanzieller Sicht nachteilig ist.

Der Erfindung liegt daher die Aufgabe zugrunde, die Fertigung von grossen Kegelrädern einerseits zu vereinfachen und andererseits zu beschleunigen, ohne dabei Qualitätseinbussen in Kauf nehmen zu müssen.

Eine weitere Aufgabe der Erfindung besteht darin ein Verfahren und eine entsprechende Vorrichtung bereit zu stellen, das/die zur wirtschaftlichen Bearbeitung von grossen Kegelrädern ausgelegt ist.

Dokument DE 10 124 779 welches als nächstkommender Stand der Technik betrachtet wird, zeigt eine zweispindelige spanabhebende Bearbeitungsmaschine mit einem Hurth-Modul, um ein Abwälzstimfräsen für Hypoid-Zahnradsätze durchzuführen. Ein erstes Abwälzstimfräswerkzeug, welches an der ersten der beiden Spindeln angebracht ist, führt ein Abwälzstirnfräsen und eine grobe spanabheblende Bearbeitung am Zahnrad (Werkstück) aus, und ein zweites Abwälzstirnfräswerkzeug, welches an der zweiten Spindel angebracht ist, führt eine als Endbearbeitung dienende spanabhebende Bearbeitung an dem Zahnrad (Werkstück) unter Einsatz des Abwälzstirnfräsens aus. Jede Spindel ist gesondert programmiert, um ein an einem Werkstückhalter angebrachtes Zahnrad mittels Abwälzstirnfräsens zu bearbeiten. Die erste Spindel ist nach Maßgabe von daran angebrachten Schneidwerkzeugen für eine grobe spanabhebende Bearbeitung programmiert. Nachdem die grobe spanabhebende Bearbeitung an dem Zahnrad (Werkstück) abgeschlossen ist, welches an einem Halter angebracht ist, wird das erste Schneidwerkstück vom Werkstück weggefahren, das gesamte Paar von ersten und zweiten Spindeln und zugeordneten Schneidwerkzeugen wird um 180° weitergeschaltet, und das zweite Schneidwerkzeug kommt dann in Eingriff mit dem Werkstück und führt eine abschließende spanabhebende Bearbeitung zur Herstellung des Zahnrads durch, welches an dem Werkstückhalter angebracht bleibt.

Diese Aufgaben werden gemäss der Erfindung
- für die Vorrichtung durch die Merkmale des Anspruchs 1,
- für die Verwendung der Vorrichtung durch die Merkmale des Anspruchs 10, und
- für das Verfahren durch die Merkmale des Anspruchs 13 gelöst.

Weitere vorteilhafte Ausgestaltungen ergeben sich aus den jeweiligen Unteransprüchen.

Das erfindungsgemässe Verfahren ist speziell für die Bearbeitung von Zahnflanken vor einem Härteprozess, also im weichen Zustand, ausgelegt. Entsprechend sind die Werkzeuge auszuwählen, die zum Einsatz kommen.

Die Erfindung ist speziell für grossmodulige Kegelräder (vorzugsweise mit einem Modul grösser als 12) ausgelegt und für diese spezielle Verwendung besonders wirtschaftlich.

### ZEICHNUNGEN

Ausführungsbeispiele der Erfindung werden im Folgenden unter Bezugnahme auf die Zeichnungen näher beschrieben. Es zeigen:
- **FIG. 1**: ein Schema für die erfindungsgemässe Bearbeitung von Kegelrädern,
- **FIG. 2**: eine schematische, beispielhafte Seitenansicht einer ersten erfindungsgemässen Vorrichtung;
- **FIG. 3**: eine schematische Ansicht einer weitere Seite der ersten Vorrichtung;
- **FIG. 4**: eine schematische Perspektivansicht der ersten Vorrichtung;
- **FIG. 5**: eine schematische Ansicht des Bearbeitungsarmes der ersten Vorrichtung.

### Detaillierte Beschreibung

Es geht gemäss Erfindung um die Bearbeitung von grossmoduligen Kegelrädern. Dieser Begriff umfasst definitionsgemäss auch Tellerräder und Kegelritzel. Auch mit umfasst sind Kegelräder ohne Achsversatz und Kegelräder mit Achsversatz, sogenannte Hypoidräder. Die Erfindung bezieht sich aber primär auf das Herstellen von Tellerrädern oder Kegelritzeln mit Grossverzahnungen. Derartige Tellerräder oder Kegelritzel haben eine Durchmesser, der grösser als 1 Meter ist und zum Beispiel bis zu 3 Meter betragen kann. Die Verzahnung kann eine Zahnhöhe von bis zu 100 mm oder mehr haben.

Die vorliegende Erfindung basiert auf folgenden Erkenntnissen. Es gibt verschiedene Aspekte, die einen Beitrag zur Wirtschaftlichkeit der Bearbeitung von grossen Kegelrädern leisten. Bedingt durch die Grösse und das Gewicht des Werkstücks ist die gesamte Handhabung und das Einrichten (Ausrichten und Spannen) auf einer Maschine sehr (zeit-)aufwendig. Untersuchungen zeigen, dass für diesen Vorgang bis zu 2 Stunden veranschlagt werden müssen. Dies führt zu längeren unproduktiven Phasen der Maschine, was wiederum einen Einfluss hat auf die Wirtschaftlichkeit des Gesamtbetriebs.

Bisher werden derartige Grossverzahnungen nass bearbeitet, dass heisst es wird während des Bearbeitens Schmier- und/oder Kühlmittel zugeführt. Der Einsatz der entsprechenden Flüssigkeiten ist aber zunehmend unerwünscht und der apparative Aufwand für das Zu- und Abführen der Flüssigkeit ist nicht vernachlässigbar. Daraus ergibt sich die Forderung auch Grossverzahnungen mittels Trockenbearbeitung herstellen zu können. Dabei ist aber ein wesentlicher Punkt der Verschleiss der bisher typischerweise zur Anwendung kommenden Messerköpfe. Diese Messerköpfe bestehen aus einem Grundkörper, der mit mehreren Messern (wie zum Beispiel Form- oder Stabmessern) bestückt ist, die sehr genau konditioniert sein müssen und deren Position im Messerkopf sehr präzise eingestellt werden muss. Sind die Messer verschlissen, so muss der Messerkopf abgebaut werden und die Messer werden neu geschliffen oder durch neue ersetzt. Erst dann kommt der Messerkopf wieder zum Einsatz. Auch dies führt dazu, dass ein Übertragung bisheriger Ansätze ins "Trockene" nicht wirtschaftlich wäre.

Auf diesen Punkten baut nun die Erfindung auf, wie im Folgenden näher erläutert wird.

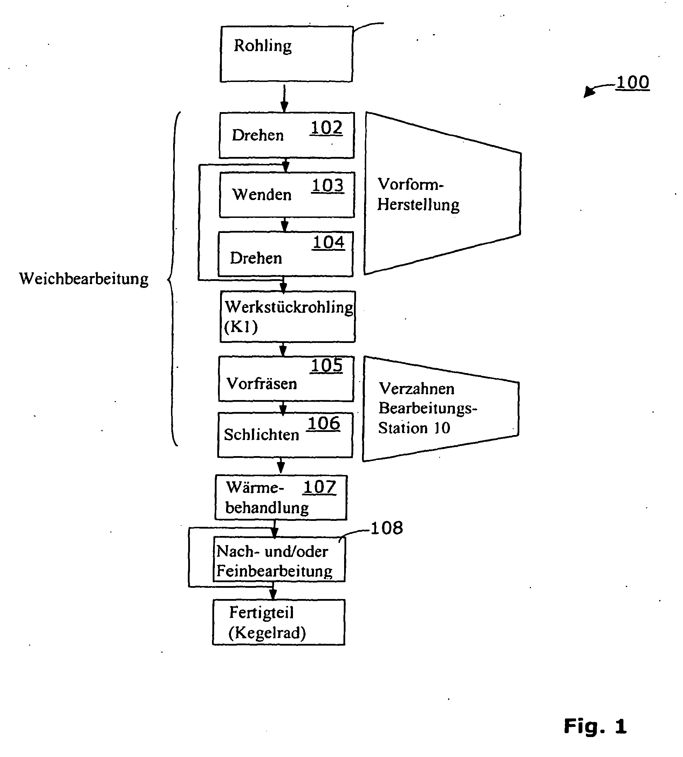

Fig. 1 zeigt eine schematische Darstellung eines beispielhaften Verfahrensablaufs 100. Die Erfindung kann in dem gezeigten Zusammenhang vorteilhaft eingesetzt werden. Es handelt sich, wie erwähnt, um ein Beispiel für die Bearbeitung eines grossmoduligen Tellerrades oder Kegelritzels. Ausgehend von einem Rohling (Box 101) werden in dem gezeigten Beispiel folgende Weichbearbeitungsschritte durchgeführt. Es kann zum Beispiel eine (Zentral-) Bohrung durch Drehen (Box 102) erzeugt werden. Dann kann der Rohling zur weiteren Bearbeitung gewendet werden (Box 103). Nach dem Wenden kann eine erneute Drehbearbeitung folgen (Box 104). Diese Schritte sind optional und werden im vorliegenden Zusammenhang als Vorform-Herstellung bezeichnet. Im Rahmen der Vorform-Herstellung können auch andere Schritte oder alternative Schritte ausgeführt werden. Am Ende der Vorform-Herstellung wird das Werkstück als Radrohling oder Werkstückrohling K1 bezeichnet. Der Schritt 102 oder die Schritte 102 - 104 können zum Beispiel in einer sogenannten Vorbearbeitungsmaschine oder in mehreren verschiedenen Maschinen ausgeführt werden.

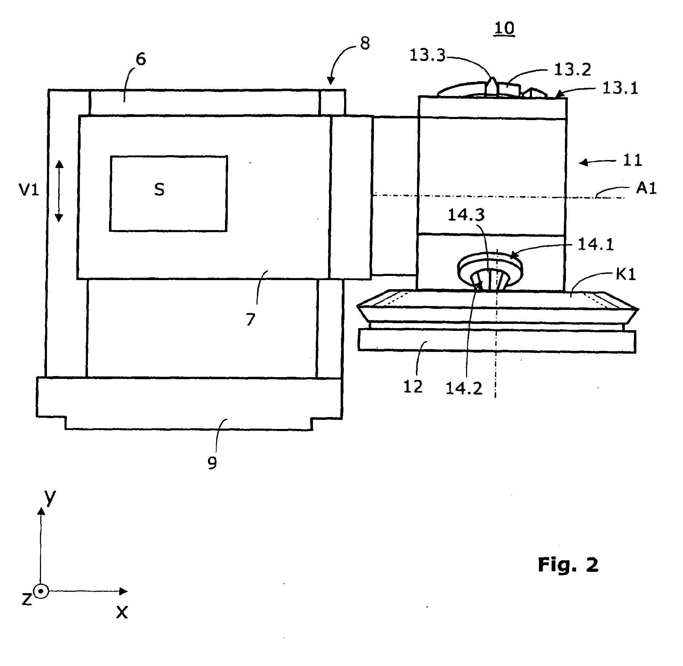

Nun folgt das sogenannte Verzahnen. Gemäss Erfindung wird als Verfahren vorzugsweise das (Trocken-)Kegelradfräsen (Box 105) eingesetzt, um im Rahmen eines Vorbearbeitungsprozesses mit einem Fingerfräser 14.2 (siehe zum Beispiel Fig. 2) eine vordefinierte Anzahl von Zahnlücken am Kegelradrohling K1 in der ungefähren Position und mit ungefähren Aufmassen zu fräsen. Der mit 105 gekennzeichnete Schritt wird hier auch als (Kegelrad-) Vorfräsen bezeichnet. Dann folgt der Schritt des (Kegelrad-)Schlichtens (Box 106), der gemäss Erfindung mit einem Kegelradschlichtwerkzeug 13.2 ausgeführt wird und der durch die Schlichtbearbeitung den Zahnlücken, respektive den angrenzenden Zahnflanken, die gewünschte Form mit der vorgegebenen Genauigkeit gibt.

Die Schritte 105 und 106 werden gemäss Erfindung in ein und derselben Maschine 10 ausgeführt. Der Werkstückrohling K1 muss also nicht umgespannt oder transferiert werden.

Anschliessend folgt typischerweise eine Wärmebehandlung (Box 107). Diese Wärmebehandlung zählt typischerweise nicht mehr zur Weichbearbeitung. Sie dient dazu den Werkstückrohling K1 zu härten. Dann kann eine optionale Nach- und / oder Feinbearbeitung (Box 108) folgen. So können zum Beispiel (Lagersitze geschliffen oder hartgedreht werden und/oder es kann eine Hartbearbeitung der Verzahnung erfolgen. Dann ist das grossmodulige Kegelrad fertig.

Weitere Details der Erfindung werden im Folgenden anhand einer genaueren Beschreibung eines Ausführungsbeispiels einer entsprechenden Maschine 10 und deren Verwendung beschrieben.

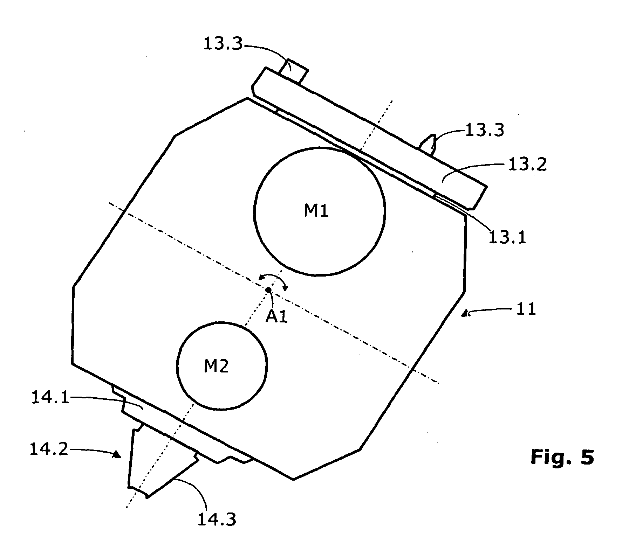

In den Figuren 2, 3 und 4 sind verschiedene Ansichten und in Fig. 5 ist ein schematisierter Teil einer erfindungsgemässen Maschine 10 gezeigt. Wie in den Figuren zu erkennen ist, weist die Maschine 10 einen senkrecht stehendes Maschinenteil 8 mit einer vertikal verlaufenden Führung 6 (oder alternativ mit mehreren Führungen) auf. An dem Gehäuse 8 ist seitlich ein Maschinenteil 7 angebracht, das entlang der Führung(en) 6 nach oben und unten (d.h. parallel zur y-Achse) verschiebbar ist, wie durch den Doppelpfeil V1 angedeutet. Das Maschinenteil 8 wiederum sitzt auf einem horizontalen Maschinenbett 9 und kann entlang dieses Maschinenbettes 9 in z-Richtung verschoben werden, wie durch den Doppelpfeil V2 angedeutet. Das Maschinenteil 7 trägt einen Bearbeitungsarm 11, der um eine Schwenkachse A1 geschwenkt werden kann. Diese Schwenkachse A1 liegt in Fig. 2 in der Zeichenebene, d.h. sie verläuft parallel zur x-Achse. Unterhalb des Bearbeitungsarms 11 liegt der zu bearbeitende Kegelradrohling K1 flach (d.h. horizontal in der x-z Ebene) auf oder in einer Aufnahme 12 (zum Beispiel in Form einer Spindel oder eines Spindeltisches), deren Rotationsachse A2 parallel zur y-Achse verläuft.

Es handelt 1 sich also bei der Maschine 10 um eine vertikal oder schräg arbeitende 2 Maschine (je nach Stellung des Bearbeitungsarmes 11), bei welcher beim Verzahnen die Werkstückspindel mit dem Radrohling K1 unterhalb der Werkzeugspindel mit dem Verzahnungswerkzeug 13.2 oder 14.2 angeordnet ist.

Vorzugsweise sitzen sowohl die Aufnahme 12 als auch das Maschinenbett 9 auf einem gemeinsamen Maschinenpodest oder Unterbau, der aber in den Figuren nicht gezeigt ist.

An dem Bearbeitungsarm 11 ist an einer ersten Seite eine erste Werkzeugspindel 13.1 zur Aufnahme eines als Kegelradschlichtwerkzeug dienenden Messerkopfes 13.2 vorgesehen. An einer zweiten Seite des Bearbeitungsarms 11 ist eine zweite Werkzeugspindel 14.1 zur Aufnahme eines als Verzahnungswerkzeug dienenden Fingerfräsers 14.2 angebracht. In der Abbildung von Fig. 2 ist der Fingerfräser 14.2 bei dem Vorfräsen des Kegelradrohlings K1 gezeigt, während der Messerkopf 13.2 nach oben zeigt und nicht zum Einsatz kommt.

Der Bearbeitungsarm 11 weist gemäss Erfindung einen langsamen, für grössere Drehmomente ausgelegten ersten Antrieb M1 und einen schnellen, für kleinere Drehmomente ausgelegten zweiten Antrieb M2 auf, wie in Fig. 5 schematisch anhand zweier Kreise angedeutet. Diese Antriebe M1 und M2 umfassen Motoren, die vorzugsweise in dem Bearbeitungsarm 11 sitzen, und gegebenenfalls Über- oder Untersetzungen. Es ist auch möglich einen Teil der Antriebe an einem anderen Ort der Maschine 10 unterzubringen und mittels Wellen die Drehbewegung in den Bearbeitungsarm 11 und von dort auf die Spindeln 13.1 und 14.1 zu leiten.

Die ganze Anordnung ist so ausgelegt, dass die erste Werkzeugspindel 13.1 durch den ersten Antrieb M1 und die zweite Werkzeugspindel 14.1 durch den zweiten Antrieb angetrieben werden kann, wobei normalerweise entweder der eine oder der andere Antrieb in Funktion ist.

Es kann auch ein einziger Motor vorgesehen sein, der beide Spindeln 13.1 und 14.1 abwechselnd antreibt, wobei dann durch entsprechende Antriebsstränge die notwendige Drehzahl bereitgestellt wird.

Vorzugsweise werden gemäss Erfindung das Kegelradschlichtwerkzeug mit einer Drehzahl von weniger als 100 U/min und der Fingerfräser mit einer Drehzahl zwischen 800 und 2500 U/min angetrieben.

Die Maschine 10 umfasst eine CNC-Steuerung S, wie in Fig. 2 schematisch angedeutet, oder die Maschine 10 ist mit einer externen CNC-Steuerung S verbunden. Die CNC-Steuerung S ist so programmiert, dass sie die einzelnen erfindungsgemässen Bewegungsabläufe steuert. Durch die CNC-Steuerung S wird der Fingerfräser 14.2 mittels des zweiten Antriebs M2 in eine schnelle Rotation versetzt und es werden die Maschinenachsen so bewegt (Zustellbewegung genannt), dass der Fingerfräser 14.2 in den Werkstückrohling K1 eintaucht und in einem generierenden Vorbearbeitungsprozess den Kegelradrohling K1 mit dem Fingerfräser 14.2 bearbeitet. Dabei wird eine 3-dimensionale Relativbewegung zwischen Fingerfräser 14.2 und Werkstückrohling K1 so ausgeführt, dass eine vordefinierte Anzahl von Zahnlücken mit vordefinierter Form am Kegelradrohling K1 in der ungefähren Position und mit ungefähren Aufmassen geschnitten, bzw. gefräst wird.

Während dieses Vorbearbeitungsprozesses wird an dem Kegelradrohling K1 mit dem Fingerfräser 14.2 zwischen 50% und 95% des Materials im Bereich von zu fertigenden Zahnlücken weggefräst, bevor dann der Nachbearbeitungsprozess einsetzt. Es handelt sich also um eine Grob- oder Räumbearbeitung. Da es nicht um eine genaue Fertigung der Zahnlücken sondern nur um eine Vorbearbeitung geht, ist es somit auch nicht besonders kritisch, wenn der Fingerfräser 14.2 gewisse Abnutzungserscheinungen zeigt, da dies keinen oder nur einen geringen Einfluss auf den anschliessenden Nachbearbeitungsprozess hat.

Es wird als ein wesentlicher Vorteil der Erfindung angesehen, dass der Fingerfräser 14.2 keinen besonders hohen Anforderungen genügen muss. Es kann in den meisten Fällen ein Standard-Fingerfräser oder eine geeignete Variante eingesetzt werden, die relativ günstig ist. Ist der Fingerfräser 14.2 verschlissen, so kann er mit wenigen Handgriffen ausgetauscht werden. Zu diesem Zweck weist die Spindel 14.1 vorzugsweise eine Schnellspannvorrichtung auf. Der Aufbau der Maschine 10 ermöglicht es sogar den Fingerfräser 14.2 auszuwechseln während das Schlichten mit dem Werkzeug 13.2 durchgeführt wird.

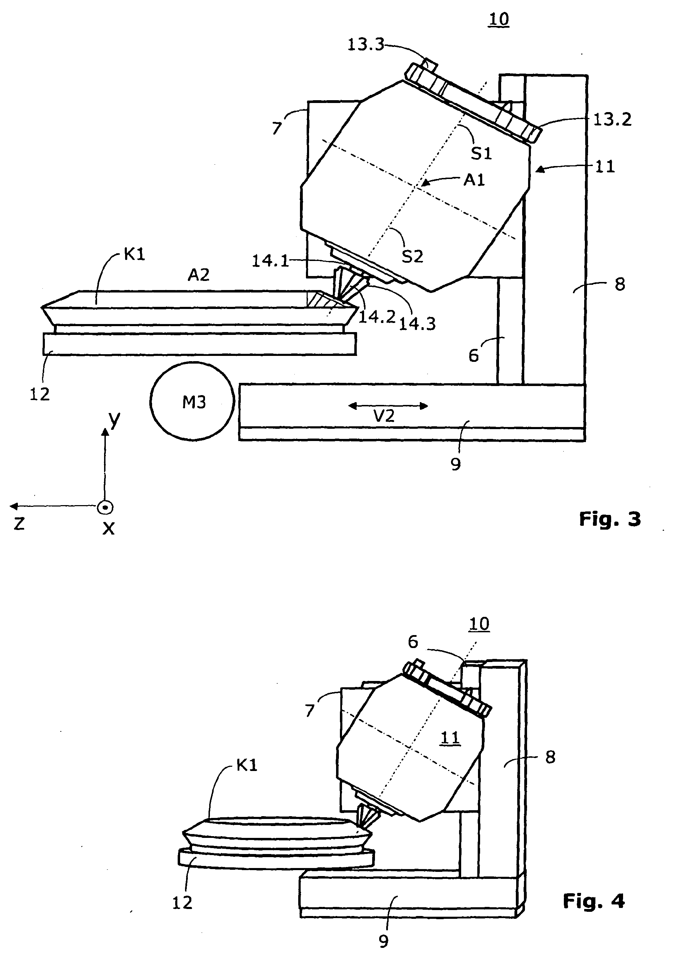

Der Fingerfräser 14.2 weist vorzugsweise einen konischen oder trapezförmigen Querschnitt in einer Axialebene auf, wie zum Beispiel in Fig. 4 zu erkennen ist. Besonders bevorzugt sind Fingerfräser 14.2 aus Hartmetall. Der Fingerfräser 14.2 kann 1 oder mehrere Schnittkanten 14.3 aufweisen. In Fig. 3 sind mehrere solche Schnittkanten erkennbar. Weiter kann man den Abbildungen entnehmen, dass der Fingerfräser 14.2 einen deutlich kleineren Durchmesser hat als der als Kegelradschlichtwerkzeug dienende Messerkopf 13.2. Vorzugsweise beträgt der Durchmesser des Fingerfräsers 14.2 weniger als 20% des Durchmessers der Messerkopfes 13.1. Dabei ist zu beachten, dass der Fingerfräser 14.2 kleiner sein muss als die Lücke, die er erzeugt.

Vorteilhafterweise kommen Kegelradschlichtwerkzeuge mit einem Durchmesser zwischen 500 und 1300mm zum Einsatz, während der Fingerfräser typischerweise einen Umfang am unteren Kegelende zwischen 10 und 25mm und am oberen Kegelende zwischen 80 und 100mm haben kann.

Der Fingerfräser wird vorzugsweise nur auf einer Bahn die in etwa der Lücke entspricht geführt und erzeugt dabei ein seiner Form entsprechendes Zahnprofil. Das Endprofil der Zähne wird durch das Schlichten mit dem Messerkopf erzeugt. Je nach Ausführungsform kann sich der Kegelradrohling K1 während der Vorbearbeitung jeder Zahnlücke leicht um die Werkstückachse A2 drehen, oder der Kegelradrohling K1 kann bei der Vorbearbeitung jeder Zahnlücke ruhen. Beim Sprung zur nächsten zu fertigenden Zahnlücke macht dann der Kegelradrohling K1 stets eine sogenannte Teilungsdrehbewegung um die Werkstückachse A2.

Um den Kegelradrohling K1 kontinuierlich oder schrittweise drehen zu können, ist ein Werkstückantrieb M3 vorgesehen, der eine kontrolliert gesteuerte Rotation um die Werkstückachse A2 ermöglicht. Der entsprechende Antrieb M3 ist in Fig. 3 schematisch angedeutet.

Bei dem zweiten in der gleichen Maschine 10 zum Einsatz kommenden Werkzeug handelt es sich, wie bereits erwähnt, um einen als Kegelradschlichtwerkzeug dienenden Messerkopf 13.2. Dieser Messerkopf 13.2 ist mit mehreren Messern 13.3 bestückt, die so geformt und angeordnet sind, dass sie beim Eintauchen in den Werkstückrohling K1 mit vorgefertigten Zahnlücken eine Schlichtbearbeitung ausführen. Bei der Schlichtbearbeitung macht einerseits der Messerkopf 13.2 eine Drehbewegung um die Spindelachse S1 und andererseits auch der Kegelradrohling K1 eine Drehbewegung um die Werkstückachse A2. Dadurch kommt es zu einer generierenden Wälzbewegung zwischen den Schneidkanten der Messer 13.3 und dem Kegelradrohling K1 Auch kann im kontinuierlichen oder einzelteilenden Verfahren geschlichtet werden.

Vorzugsweise sind die Messer 13.3 des Messerkopfes 13.2 axial zu dem Messerkopf 13.2 gerichtet (d.h. sie liegen parallel zu der Spindelachse S1), wie zum Beispiel in Fig. 5 zu erkennen ist.

Für die Bearbeitung der Kegelradverzahnung werden gemäss Erfindung je nach Anwendungsfall Werkzeuge aus Hochleistungsstahl, aus Hartmetall, aus Keramik, oder aus Cermet (Kombination aus Metall und Keramik) mit jeweils einer geeigneten Hartstoffbeschichtung eingesetzt.

Die oben beschriebenen Vorgänge, respektive die Bewegungsabläufe, werden durch die genannte CNC-Steuerung S koordiniert.

Es ist ein Vorteil der Erfindung, dass die Werkzeugkosten pro gefertigtem Kegelrad deutlich günstiger sind als bei herkömmlichen Verfahren für das Herstellen von Grossverzahnungen. Ein weiterer Vorteil liegt darin, dass der neuartige Aufbau der Maschine 10, mit der Anordnung der beiden Werkzeuge 13.2 und 14.2 an einem gemeinsamen Bearbeitungsarm 11 es möglich macht auch besonders grosse Kegelräder zu bearbeiten, da der Arm 11 problemlos oberhalb des horizontal liegenden Kegelrades bewegt werden kann.

Die gezeigte und beschriebene Ausführungsform ist eine 6-achsige Maschine 10, die Relativbewegungen in mehreren Richtungen erlaubt. Und zwar sind die folgenden Bewegungen möglich: (Lateral-)Verschiebung V1, (Horizontal-) Verschiebung V2, Schwenkbewegung um A1, Rotation des ersten Werkzeugs 13.2 um die Spindelachse S1, Rotation des zweiten Werkzeugs 14.2 um die Spindelachse S2, und Rotation des Werkstücks K1 um die Achse A2.

In einer alternativen Ausführungsform können eine oder beide Bewegungen in der y-z Ebene und in der x-z Ebene durch ein Verschieben des Kegelradrohlings K1 ausgeführt werden. In diesem Fall ist eine Verschiebbarkeit V1 oder V2 nicht mehr notwendig.

Bei den verschiedenen Achsen handelt es sich um numerisch kontrollierte Achsen. Dadurch können die einzelnen Bewegungen numerisch von der CNC-Steuerung S gesteuert werden. Vorzugsweise ist die Steuerung S so auslegt, dass alle Achsen numerisch kontrolliert gesteuert sind. Wichtig ist, dass einzelne der Bewegungsabläufe koordiniert erfolgen. Diese Koordinierung wird durch die CNC-Steuerung S vorgenommen.

Auch von Vorteil ist die horizontale Lage des zu bearbeitenden Kegelrades. Durch diese Art der Anordnung gibt es keine radial gerichteten Kräfte mehr (zumindest solange keine Kräfte durch Werkzeuge auf das Kegelrad ausgeübt werden), die bei einer vertikalen Einspannung besonders bei grossen Massen ein Problem darstellt. Es wirken nur Kräfte in axialer Richtung, d.h. parallel zur Achse A2. Außerdem wurde die Lage der verschiedenen numerisch kontrollierten Achsen so gewählt, dass es für die Bearbeitung des Werkstücks K1 einen möglichst großen Bewegungsspielraum gibt.

Ausserdem kann der schwere und grosse Kegelradrohling K1 problemlos mittels eines Krans oder eines anderen Hebemittels zu- und abgeführt werden.

Das Verwenden eines Fingerfräsers 14.2 ist vorteilhaft, da solche Fräser besonders dafür prädestiniert sind ins Volle zu arbeiten, d.h. mit anderen Worten für die Grob- oder Räumbearbeitung eingesetzt zu werden.

Ausserdem können vorzugsweise Fingerfräser 14.2 verwendet werden, die einfach instandzuhalten sind. Auch ist es einfacher und kostengünstiger einen hochdrehenden Antrieb M2 für einen Fingerfräser 14.2 mit geringem Durchmesser zu realisieren, als einen entsprechenden hochdrehenden Antrieb für einen grossen und schweren Messerkopf 13.2. Weiterhin ist, wie erwähnt, der Werkzeugwechsel einfacher und schneller. Zusätzlich sind die Kräfte, die auf die Maschine 10 wirken während der Grobbearbeitung deutlich geringer.

## Patentansprüche

1. Vorrichtung (10) zur Verwendung bei der Weichbearbeitung von Kegelrädern, mit einer Aufnahme (12) zum Aufnehmen eines Kegelradrohlings (K1) und mit einer ersten Werkzeugspindel (13.1) zur Aufnahme eines als Kegelradschlichtwerkzeug dienenden Messerkopfes (13.2), wobei
- die Vorrichtung (10) einen von einer CNC-Steuerung (S) gesteuerten Bearbeitungsarm (11) mit einer Schwenkachse (A1) zum Verzahnen des Kegelradrohlings (K1) umfasst, wobei der Bearbeitungsarm (11) an einer ersten Seite die erste Werkzeugspindel (13.1) zur Aufnahme des als Kegelradschlichtwerkzeug dienenden Messerkopfes (13.2) und an einer zweiten Seite eine zweite Werkzeugspindel (14.1) zur Aufnahme eines als Verzahnungswerkzeug dienenden Fingerfräsers (14.2) aufweist,
- der Bearbeitungsarm (11) einen langsamen, für grössere Drehmomente ausgelegten ersten Antrieb (M1) und einen schnellen, für kleinere Drehmomente ausgelegten zweiten Antrieb (M2) aufweist, wobei die erste Werkzeugspindel (13.1) durch den ersten Antrieb (M1) und die zweite Werkzeugspindel (14.1) durch den zweiten Antrieb (M2) antreibbar ist,
- die CNC-Steuerung (S) im Betrieb die zweite Werkzeugspindel (14.1) mittels des zweiten Antriebs (M2) in eine schnelle Rotation versetzt und in einem generierenden Vorbearbeitungsprozess den Kegelradrohling (K1) mit dem Fingerfräser (14.2) bearbeitet, um eine vordefinierte Anzahl von Zahnlücken am Kegelradrohling (K1) in der ungefähren Position und mit ungefähren Aufmassen zu schneiden,
- mittels der CNC-Steuerung anschließend der Bearbeitungsarm (11) um die Schwenkachse (A1) geschwenkt wird, und
- die CNC-Steuerung (S) anschließend die erste Werkzeugspindel (13.1) mittels des ersten Antriebs (M1) in eine langsamere Rotation versetzt und dann in einem Nachbearbeitungsprozess den Kegelradrohling (K1) mit dem Kegelradschlichtwerkzeug (13.2) bearbeitet.

2. Vorrichtung (10) nach Anspruch 1 mit einem Messerkopf (13.2) und einem Fingerfräser (14.2), **dadurch gekennzeichnet, dass** der als Kegelradschlichtwerkzeug dienende Messerkopf (13.2) mehrere Messer (13.3) umfasst, die axial zu dem Messerkopf (13.2) gerichtet sind.

3. Vorrichtung (10) nach Anspruch 1 oder 2 mit einem Messerkopf (13.2) und einem Fingerfräser (14.2), **dadurch gekennzeichnet, dass** der Fingerfräser (14.2) einen konischen oder trapezförmigen Querschnitt in einer Axialebene hat, und wobei es sich bei dem Fingerfräser (14.2) vorzugsweise um einen Hartmetallfräser handelt.

4. Vorrichtung (10) nach Anspruch 1 mit einem Messerkopf (13.2) und einem Fingerfräser (14.2), **dadurch gekennzeichnet, dass** der Fingerfräser (14.2) eine oder mehrere Schnittkanten (14.3) aufweist.

5. Vorrichtung (10) nach einem der vorhergehenden Ansprüche mit einem Messerkopf (13.2) und einem Fingerfräser (14.2), **dadurch gekennzeichnet, dass** der Fingerfräser (14.2) einen kleinere Durchmesser hat als der als Kegelradschlichtwerkzeug dienende Messerkopf (13.2).

6. Vorrichtung (10) nach einem der vorhergehenden Ansprüche, **dadurch gekennzeichnet, dass** der Kegelradrohling (K1) durch die Aufnahme (12) im Betrieb in einer horizontalen Lage aufgenommen und drehbar gelagert ist und der Bearbeitungsarm (11) oberhalb des Kegelradrohlings (K1) an der Vorrichtung sitzt.

7. Vorrichtung (10) nach einem der vorhergehenden Ansprüche, **dadurch gekennzeichnet, dass** sie eine Werkstückachse (A2) und einen Werkstückantrieb (M3) umfasst, um den Kegelradrohling (K1) während der Bearbeitung und/oder in Z'wischenschritten um die Werkstückachse (A2) zu drehen.

8. Vorrichtung (10) nach einem der vorhergehenden Ansprüche, **dadurch gekennzeichnet, dass** die erste Seite und die zweite Seite des Bearbeitungsarms (11) einander gegenüberliegen und die erste Werkzeugspindel (13.1) eine erste Spindelachse (S1) und die zweite Werkzeugspindel (14.1) eine zweite Spindelachse (52) aufweisen, die parallel zueinander verlaufen.

9. Vorrichtung (10) nach einem der vorhergehenden Ansprüche, **dadurch gekennzeichnet, dass** es sich um eine Vorrichtung (10) mit insgesamt 6 Achsen handelt.

10. Verwendung einer Vorrichtung nach einem der vorhergehenden Ansprüche zur Bearbeitung von grossmoduligen, vorzugsweise spiralverzahnten Kegelrädern.

11. Verwendung nach Anspruch 10, wobei die Bearbeitung trocken, d.h. ohne Schmier- oder Kühlmittel erfolgt.

12. Verwendung nach Anspruch 10 oder 11, wobei während des Vorbearbeitungsprozesses an dem Kegelradrohling (K1) mit dem Fingerfräser (14.2) zwischen 50% und 95% des Materials im Bereich von zu fertigenden Zahnlücken weggefräst wird, bevor dann der Nachbearbeitungsprozess einsetzt

13. Verfahren zur Weichbearbeitung von Kegelrädern mit einer Vorrichtung nach einem der Ansprüche 1 bis 9 mit den folgenden Schritten:
- horizontales Einbringen eines zu bearbeitenden Kegelradrohlings (K1) in die Vorrichtung (10),
- Zustellen eines als Vorverzahnungswerkzeug dienenden Fingerfräsers (14.2) durch Ausführen einer Relativbewegung zwischen dem Kegelradrohling (K1) und dem Bearbeitungsarm (11) der Vorrichtung (10),
- Vorbearbeitung des Kegelradrohlings (K1) mit dem Fingerfräser (14.2), indem dieser in eine schnelle Rotation versetzt und in einer generierenden Bewegung in den Kegelradrohling (K1) eintaucht, um eine vordefinierte Anzahl von Zahnlücken am Kegelradrohling (K1) in der ungefähren Position und mit ungefähren Aufmassen zu schneiden,
- Schwenken des Bearbeitungsarms (11) und Ausführen einer relativen Zustellbewegung, um den Messerkopf (13.2) in eine Ausgangsposition zu bringen,
- Nachbearbeitung des Kegelradrohlings (K1) mit dem Messerkopf (13.2), wobei der Messerkopf (13.2) in eine langsamere Rotation versetzt wird und durch eine Wälzbewegung den Kegelradrohling (K1) bearbeitet.

14. Verfahren nach Anspruch 13, **dadurch gekennzeichnet, dass** der Kegelradrohling (K1) vor dem Einbringen in die Vorrichtung (10) in einer separaten Vorrichtung präzise eingespannt oder vorpositioniert wird.

15. Verfahren nach Anspruch 13 oder 14, **dadurch gekennzeichnet, dass** der Fingerfräser (14.2), falls er verschlissen ist oder durch einen anderen ersetzt werden muss, gelöst und entnommen wird, wobei dies vorzugsweise geschieht während der Messerkopf (13.2) zum Einsatz kommt.

16. Verfahren nach einem der Ansprüche 13 bis 15, **dadurch gekennzeichnet, dass** während der Vorbearbeitung des Kegelradrohlings (K1) mit dem Fingerfräser (14.2) entweder der Kegelradrohling (K1) um eine Achse (A2) gedreht wird, oder der Kegelradrohling (K1) im Moment der Bearbeitung ruht.

17. Verfahren nach einem der Ansprüche 13 bis 16, **dadurch gekennzeichnet, dass** während der Nachbearbeitung des Kegelradrohlings (K1) mit dem Messerkopf (13.2) der Kegelradrohling (K1) um eine Achse (A2) gedreht wird und sich daraus die Wälzbewegung ergibt.

## Claims

1. Device (10) for use in the green machining of bevel gears, with a receptacle (12) for receiving a bevel gear blank (K1) and with a first tool spindle (13.1) for receiving a cutter head (13.2) used as a bevel gear finishing tool, wherein
- the device (10) comprises a machining arm (11), controlled by a CNC controller (S), having a pivot axis (A1) for gear cutting the bevel gear blank (K1), the machining arm (11) having the first tool spindle (13.1) for receiving the cutter head (13.2) used as a bevel gear finishing tool on a first side and having a second tool spindle (14.1) for receiving an end mill (14.2) serving as a gear cutting tool on a second side,
- the machining arm (11) has a slow first drive (M1) for greater torques and a rapid second drive (M2) for lesser torques, the first tool spindle (13.1) being drivable by the first drive (M1) and the second tool spindle (14.1) being drivable by the second drive (M2),
- the CNC controller (S), in operation, sets the second tool spindle (14.1) into a rapid rotation using the second drive (M2) and, in a generating pre-machining process, machines the bevel gear blank (K1) using the end mill (14.2) to cut a predefined number of tooth gaps on the bevel gear blank (K1) in the approximate position and having approximate dimensions,
- subsequently, using the CNC controller, the machining arm (11) is pivoted around the pivot axis (A1), and
- the CNC controller (S) subsequently sets the first tool spindle (13.1) into a slower rotation using the first drive (M1) and then, in a post-machining process, machines the bevel gear blank (K1) using the bevel gear finishing tool (13.2).

2. Device (10) according to Claim 1 with a cutter head (13.2) and an end mill (14.2), **characterized in that** the cutter head (13.2) serving as a bevel gear finishing tool comprises multiple cutters (13.3), which are oriented axially to the cutter head (13.2).

3. Device (10) according to Claim 1 or 2 with a cutter head (13.2) and an end mill (14.2), **characterized in that** the end mill (14.2) has a conical or trapezoidal cross-section in an axial plane, the end mill (14.2) preferably being a cemented carbide mill.

4. Device (10) according to Claim 1 with a cutter head (13.2) and an end mill (14.2), **characterized in that** the end mill (14.2) has one or more cutting edges (14.3).

5. Device (10) according to one of the preceding claims with a cutter head (13.2) and an end mill (14.2), **characterized in that** the end mill (14.2) has a smaller diameter than the cutter head (13.2) serving as a bevel gear finishing tool.

6. Device (10) according to one of the preceding claims, **characterized in that** the bevel gear blank (K1) is accommodated and mounted so it is rotatable in a horizontal position by the receptacle (12) in operation and the machining arm (11) is seated on the device above the bevel gear blank (K1).

7. Device (10) according to one of the preceding claims, **characterized in that** it comprises a workpiece axis (A2) and a workpiece drive (M3) to rotate the bevel gear blank (K1) around the workpiece axis (A2) during the machining and/or in intermediate steps.

8. Device (10) according to one of the preceding claims, **characterized in that** the first side and the second side of the machining arm (11) are opposite to one another and the first tool spindle (13.1) comprises a first spindle axis (S1) and the second tool spindle (14.1) comprises a second spindle axis (S2), which run parallel to one another.

9. Device (10) according to one of the preceding claims, **characterized in that** it is a device (10) having a total of 6 axes.

10. Use of a device according to one of the preceding claims for machining large-module, preferably spiral-toothed bevel gears.

11. Use according to Claim 10, wherein the machining is performed dry, i.e., without lubricant or coolant.

12. Use according to Claim 10 or 11, wherein, during the premachining process on the bevel gear blank (K1) using the end mill (14.2), between 50% and 95% of the material is milled away in the area of tooth gaps to be manufactured, before the post-machining process then begins.

13. Method for the green machining of bevel gears using a device according to one of Claims 1 through 9, having the following steps:
- horizontally introducing a bevel gear blank (K1) to be machined into the device (10),
- feeding an end mill (14.2) used as a pre-gear cutting tool by executing a relative movement between the bevel gear blank (K1) and the machining arm (11) of the device (10),
- premachining the bevel gear blank (K1) using the end mill (14.2), in that it is set into a rapid rotation and plunged into the bevel gear blank (K1) in a generating movement to cut a predefined number of tooth gaps on the bevel gear blank (K1) in the approximate position and having approximate dimensions,
- pivoting the machining arm (11) and executing a relative feed movement to bring the cutter head (13.2) into a starting position,
- post-machining the bevel gear blank (K1) using the cutter head (13.2), the cutter head (13.2) being set into a slower rotation and machining the bevel gear blank (K1) by a rolling movement.

14. Method according to Claim 13, **characterized in that** the bevel gear blank (K1) is precisely chucked or pre-positioned in a separate device before the introduction into the device (10).

15. Method according to Claim 13 or 14, **characterized in that** the end mill (14.2), if it is worn or must be replaced by another, is loosened and removed, this preferably occurring while the cutter head (13.2) is being used.

16. Method according to one of Claims 13 through 15, **characterized in that,** during the premachining of the bevel gear blank (K1) using the end mill (14.2), either the bevel gear blank (K1) is rotated around an axis (A2), or the bevel gear blank (K1) is at rest at the moment of the machining.

17. Method according to one of Claims 13 through 16, **characterized in that,** during the post-machining of the bevel gear blank (K1) using the cutter head (13.2), the bevel gear blank (K1) is rotated around an axis (A2) and the rolling movement results therefrom.

## Revendications

1. Dispositif (10) destiné à une utilisation pour l'usinage pour matières tendres de roues coniques, comportant un logement (12) destiné à recevoir une ébauche de roue conique (K1) et comportant une première broche porte-outil (13.1) destinée à recevoir une tête de fraisage (13.2) servant d'outil finisseur de roue conique, dans lequel
- le dispositif (10) comprend un bras d'usinage (11) commandé par une commande numérique (S) qui présente un axe de pivotement (A1) permettant de tailler les engrenages de l'ébauche de roue conique (K1), où le bras d'usinage (11) présente au niveau d'un premier côté la première broche porte-outil (13.1) destinée à recevoir la tête de fraisage (13.2) servant d'outil finisseur de roue conique et au niveau d'un second côté une seconde broche porte-outil (14.1) destinée à recevoir une fraise à queue (14.2) servant d'outil de taille des engrenages,
- le bras d'usinage (11) présente un premier entraînement (M1) lent, conçu pour des couples de rotation plus grands et un second entraînement (M2) rapide conçu pour des couples de rotation plus petits, la première broche porte-outil (13.1) pouvant être entraînée par le premier entraînement (M1) et la seconde broche porte-outil (14.1) par le second entraînement (M2),
- la commande numérique (S) place en fonctionnement la seconde broche porte-outil (14.1), au moyen du second entraînement (M2), en une rotation rapide, et usine lors d'un procédé de pré-usinage générateur l'ébauche de roue conique (K1) avec la fraise à queue (14.2) pour découper un nombre prédéfini d'espaces interdentaires au niveau de l'ébauche de roue conique (K1), dans la position approximative et avec des cotes approximatives,
- le bras d'usinage (11) est ensuite pivoté autour de l'axe de pivotement (A1) au moyen de la commande numérique, et
- la commande numérique (S) place ensuite la première broche porte-outil (13.1), au moyen du premier entraînement (M1), en une rotation plus lente, et usine alors, lors d'un processus de finissage, l'ébauche de roue conique (K1) avec l'outil finisseur de roue conique (13.2).

2. Dispositif (10) selon la revendication 1, comportant une tête de fraisage (13.2) et une fraise à queue (14.2), **caractérisé en ce que** la tête de fraisage (13.2) servant d'outil finisseur de roue conique comprend plusieurs couteaux (13.3) qui sont orientés dans la direction axiale de la tête de fraisage (13.2).

3. Dispositif (10) selon la revendication 1 ou 2, comportant une tête de fraisage (13.2) et une fraise à queue (14.2), **caractérisé en ce que** la fraise à queue (14.2) a une section conique ou trapézoïdale dans un plan axial, et il s'agit de préférence concernant la fraise à queue (14.2) d'une fraise pour métal dur.

4. Dispositif (10) selon la revendication 1, comportant une tête de fraisage (13.2) et une fraise à queue (14.2), **caractérisé en ce que** la fraise à queue (14.2) présente une ou plusieurs arêtes de coupe (14.3).

5. Dispositif (10) selon une ou plusieurs des revendications précédentes, comportant une tête de fraisage (13.2) et une fraise à queue (14.2), **caractérisé en ce que** la fraise à queue (14.2) a un diamètre plus petit que la tête de fraisage (13.2) servant d'outil finisseur de roue conique.

6. Dispositif (10) selon l'une des revendications précédentes, **caractérisé en ce que** l'ébauche de roue conique (K1) est en fonctionnement logée par le logement (12) dans une position horizontale, et est placée de façon à pouvoir tourner, et **en ce que** le bras d'usinage (11) repose contre le dispositif au-dessus de l'ébauche de roue conique (K1).

7. Dispositif (10) selon l'une des revendications précédentes, **caractérisé en ce qu'**il comporte un axe de pièce (A2) et un entraînement de pièce (M3) pour pouvoir faire tourner l'ébauche de roue conique (K1) autour de l'axe de pièce (A2) pendant l'usinage et/ou lors d'étapes intermédiaires.

8. Dispositif (10) selon l'une des revendications précédentes, **caractérisé en ce que** le premier côté et le second côté du bras d'usinage (11) sont opposés et **en ce que** la première broche porte-outil (13.1) présente un premier axe de broche (S1) et la seconde broche porte-outil (14.1) présente un second axe de broche (S2), qui s'étendent parallèlement l'un à l'autre.

9. Dispositif (10) selon l'une des revendications précédentes, **caractérisé en ce qu'**il s'agit d'un dispositif (10) comportant au total 6 axes.

10. Utilisation d'un dispositif selon l'une des revendications précédentes pour usiner des roues coniques de grand module, de préférence à denture hélicoïdale.

11. Utilisation selon la revendication 10, dans laquelle l'usinage s'effectue à sec, à savoir sans agent de lubrification ou de refroidissement.

12. Utilisation selon la revendication 10 ou 11, dans laquelle, pendant le processus de pré-usinage, on enlève avec la fraise à queue (14.2), au niveau de l'ébauche de roue conique (K1), entre 50 % et 95 % du matériau dans la zone des entredents à fabriquer, avant d'utiliser ensuite le processus de finissage.

13. Procédé d'usinage pour matières tendres de roues coniques avec un dispositif selon l'une des revendications 1 à 9, comportant les étapes suivantes :
- placement horizontal d'une ébauche de roue conique (K1) à usiner dans le dispositif (10),
- approche d'une fraise à queue (14.2) servant d'outil de pré-taille d'engrenages par exécution d'un déplacement relatif entre l'ébauche de roue conique (K1) et le bras d'usinage (11) du dispositif (10),
- pré-usinage de l'ébauche de roue conique (K1) avec la fraise à queue (14.2) en ce que celle-ci est déplacée selon une rotation élevée et pénètre selon un déplacement générateur dans l'ébauche de roue conique (K1) pour découper un nombre prédéfini d'espaces interdentaires au niveau de l'ébauche de roue conique (K1) dans la position approximative et avec une cote approximative,
- basculement du bras d'usinage (11) et exécution d'un déplacement d'avance relatif pour amener la tête de fraisage (13.2) dans une position de départ,
- finissage de l'ébauche de roue conique (K1) avec la tête de fraisage (13.2), où la tête de fraisage (13.2) est placée en une rotation plus lente et usine l'ébauche de roue conique (K1) par un mouvement de génération.

14. Procédé selon la revendication 13, **caractérisé en ce que** l'ébauche de roue conique (K1), avant le placement du dispositif (10), est serrée ou pré-positionnée avec précision dans un dispositif séparé.

15. Procédé selon la revendication 13 ou 14, **caractérisé en ce que** la fraise à queue (14.2), si elle est usée ou doit être remplacée par une autre, est desserrée et retirée, cette opération se produisant de préférence pendant l'utilisation de la tête de fraisage (13.2).

16. Procédé selon l'une des revendications 13 à 15, **caractérisé en ce que** pendant le pré-usinage de l'ébauche de roue conique (K1) avec la fraise à queue (14.2), soit l'ébauche de roue conique (K1) est pivotée autour de l'axe (A2), soit l'ébauche de roue conique (K1) est au repos à l'instant de l'usinage.

17. Procédé selon l'une des revendications 13 à 16, **caractérisé en ce que** pendant le finissage de l'ébauche de roue conique (K1) avec la tête de fraisage (13.2), l'ébauche de roue conique (K1) est pivotée autour d'un axe (A2) et il en découle le mouvement de génération.
